# EUROPÄISCHE PATENTSCHRIFT

(11) **EP 1 762 291 B1**
(45) Veröffentlichungstag und Bekanntmachung des Hinweises auf die Patenterteilung: **26.05.2010**
(21) Anmeldenummer: 06018500.6
(22) Anmeldetag: 04.09.2006
(51) Int. Cl.: B01D 29/09, B01D 29/64

(54) **Filter für insbesondere Teiche**
Filter especially for ponds
Filtre notamment pour bassins

(30) Priorität: 07.09.2005 DE 102005042626
(43) Veröffentlichungstag der Anmeldung: 14.03.2007
(73) Patentinhaber: Oase GmbH, 48477 Hörstel-Riesenbeck (DE)
(72) Erfinder: Wagner Utz, D-48155 Munster (DE)
(74) Vertreter: Engelmann, Kristiana

(56) Entgegenhaltungen:
- DE-A1- 19 647 956
- DE-U1- 9 213 328

## Beschreibung

Die Erfindung betrifft einen Wasserfilter, insbesondere einen Teichfilter, nach dem Oberbegriff des Anspruchs 1. Ein derartiger Filter ist beispielsweise aus der DE 102 40 454 A1 bekannt. Er umfasst ein meist als Vorfilter ausgelegtes Filtersieb, auf dessen Oberseite über eine Wasserzuführung das zu reinigende Teichwasser geleitet wird, das dann durch das Filtersieb hindurchtropft und über einen Abfluß ggf. nach vorherigem Durchlaufen eines Feinfilters wieder zurück in den Teich oder zu einer nachfolgenden Filtereinheit geleitet wird.

Problematisch an derartigen Filtern ist, dass das Filtersieb schnell verschmutzt und daher in regelmäßigen Abständen gereinigt werden muss, damit die Filterwirkung sich nicht verschlechtert oder das Sieb sogar vollständig verstopft. Deswegen ist bei dem Teichfilter der DE 102 40 454 A1 eine Spülmöglichkeit vorgesehen, durch die das Filtersieb mit einer größeren Wassermenge als im Filterbetrieb geflutet werden kann, wodurch Verschmutzungen des Filtersiebs beseitigt werden sollen. Dies hat sich in der Praxis zwar bereits als sehr hilfreich erwiesen, jedoch können durch die Spülung noch immer nicht sämtliche Verschmutzungen des Filtersiebs ausreichend entfernt werden. Es ist daher weiterhin nötig, das Filtersieb regelmäßig einer gründlichen manuellen Reinigung zu unterziehen. dazu muss der Filter geöffnet und je nach Anordnung sogar das Filtersieb ausgebaut werden.

Aus der DE 196 47 956 A1 ist eine Vorrichtung für die Reinigung von Warmwasseraquarien bekannt, bei der zwischen einem rotierenden Siebelement und einer dieses reinigenden Bürste eine Relativbewegung stattfindet.

Der Erfindung liegt daher die Aufgabe zugrunde, hier eine Verbesserung herbeizuführen und einen Filter mit geringerem Wartungsaufwand zu schaffen. Diese Aufgabe wird erfindungsgemäß durch einen Filter mit den Merkmalen des Anspruchs 1 gelöst.

Durch die mechanische Reinigung mittels einer das Filtersieb berührenden Reinigungseinrichtung wird eine gründlichere Reinigung als durch eine Wasserspülung erreicht. Damit das Filtersieb für diese Reinigung nicht ausgebaut werden muss, ist die Reinigungseinrichtung erfindungsgemäß bereits Bestandteil des Filters und so angeordnet, dass zwischen ihr und dem Filtersieb eine Relativbewegung durchführbar ist. Dadurch bewegt sich die Reinigungsvorrichtung an der Oberfläche des Filtersiebs entlang oder umgekehrt, wodurch Schmutzpartikel entfernt werden, ohne dass das Filtersieb aus dem Filter entnommen werden muss. Erfindungsgemäß umfasst der Teichfilter einen Auffangbehälter für die Schmutzpartikel, der auf einfache Weise herausnehmbar und entleerbar ist.

Der Reinigungsprozess kann beispielsweise manuell durch ein aus dem Gehäuse des Filters herausragendes Betätigungselement eingeleitet werden. Besonders vorteilhaft ist es jedoch, wenn der Reinigungsprozess über einen motorischen Antrieb erfolgt. Dadurch ist die Reinigung des Filtersiebs automatisierbar, insbesondere wenn eine Steuerung des Motors vorgesehen wird, die diesen in regelmäßigen oder bedarfsangepassten Abständen für den Reinigungsvorgang in Betrieb setzt.

Wenn das Filtersieb starr im Filter angeordnet ist, kann die Reinigungseinrichtung, die beispielsweise einen Schaber oder Schmutzabstreifer und eine nachfolgende Bürstenleiste zur gründlichen Reinigung der Sieblöcher umfassen kann, in bestimmten Abständen nach Art eines Scheibenwischers über die Sieboberfläche bewegt werden. Zur Schonung des Schmutzabstreifers kann dieser bei der Rückwärtsbewegung von dem Filtersieb abgehoben werden. Eine noch gründlichere Reinigung lässt sich erzielen, wenn zwei Reinigungsbürsten vorgesehen werden, von denen eine die Oberseite des Filtersiebs und eine die Unterseite des Filtersiebs reinigt, da auch an der Unterseite Verschmutzungen in Form von Schlamm- und Algenbildung auftritt. Die Reinigungsbürsten können gegenüberliegend angeordnet sein, wobei nur eine Bürste angetrieben werden müßte und die andere z.B. über einen Permanentmagneten mit der ersten Bürste mitbewegt werden kann. Eine Linearbewegung der Bürsten kann beispielsweise über eine Spindel eingeleitet werden. Die Bürsten können jedoch auch gegenläufig, z.B. an umlaufenden Zahnriemen bewegt werden.

Weitere Vorteile und Einzelheiten ergeben sich aus den Unteransprüchen und einem im den Zeichnungen dargestellten Ausführungsbeispiel der Erfindung, das im folgenden beschrieben wird; es zeigen:
- Fig. 1: einen erfindungsgemäßen Filter in dreidimensionaler Darstellung, teilweise aufgebrochen,
- Fig. 2: einen Schnitt durch die Mittellängsebene des Gegenstands aus Fig. 1 in Richtung II-II und
- Fig. 3: den oberen Bereich des Gegenstands aus Fig. 1 im Detail.

Wie vorstehend beschrieben ist, sind Ausbildungen eines erfindungsgemäßen Filters möglich, bei denen das Filtersieb feststeht und die Reinigungseinrichtung demgegenüber verschoben wird. Auch können Reinigungseinrichtung und Filtersieb beweglich ausgestaltet sein und insbesondere gegenläufige Bewegungen ausführen. Bei der in den Figuren dargestellten Ausführungsform ist hingegen das Filtersieb gegenüber der starren Reinigungseinrichtung beweglich angeordnet.

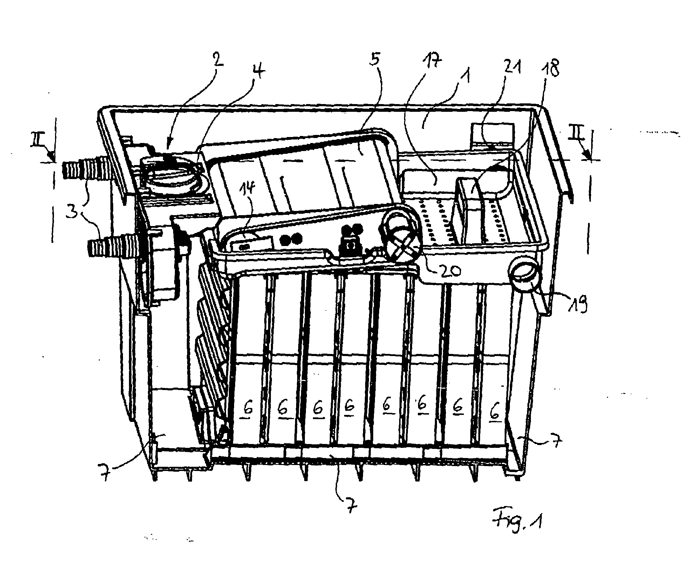

In Fig. 1 ist der Filter dargestellt mit einem Gehäuse 1, dessen vordere Wandung aus Gründen der Übersichtlichkeit ausgebrochen dargestellt ist. Das Gehäuse 1 wird obenseitig vervollständigt durch einen ebenfalls nicht dargestellten Deckel, mit dem der Filter verschlossen werden kann. Der Filter weist eine Wasserzuführung 2 auf, die aus zwei Zufuhrleitungen 3 mit zu filterndem Wasser gespeist wird. Die Wasserzuführung 2 hat eine Schlitzdüse 4 mit einer innen liegenden Zunge, über die die Schlitzbreite einstellbar ist. Über die Schlitzdüse 4 wird das zu filternde Wasser auf ein Filtersieb 5 aufgespült. Das Filtersieb 5 hat nicht dargestellte Löcher mit einer Filterfeinheit von vorzugsweise 0,1 mm bis 0,5 mm, durch die das Wasser von größeren Verunreinigungen befreit, vorgefiltert hindurchtropft. Unterhalb des Filtersiebs 5 befinden sich patronenförmig aufgebaute Feinfiltereinheiten 6, durch deren Poren das Wasser langsam hindurchsickert und dabei intensiver, durch in den Feinfiltereinheiten 6 eingelagerte Bakterien auch biologisch gereinigt wird. Das gereinigte Wasser gelangt sodann in einen Sammelbereich 7 und fließt von dort über einen Abfluss 8 zurück zum Teich, einer Pumpe oder beispielsweise nicht dargestellten weiteren Behandlungseinheiten.

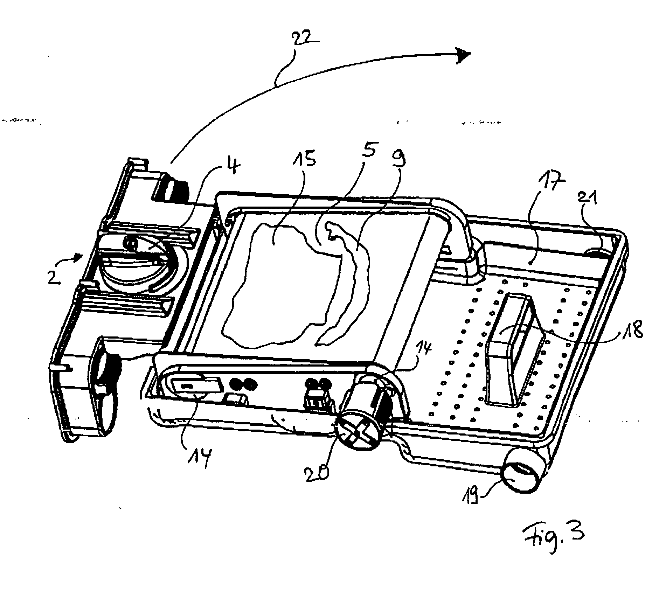

Das Filtersieb 5 ist bei der dargestellten Ausführungsform ein teilflexibles Filterband vorzugsweise aus Edelstahl oder Kunststoff, das zwar nicht dehnbar aber rollbar ist. Es wird vorzugsweise aus einem Filtergewebe gebildet, dessen Enden beispielsweise durch Schweißen, Kleben oder Nähen miteinander verbunden sind, so dass sich wie dargestellt ein umlaufendes Endlosband nach Art eines Förderbandes ergibt. Im Normalbetrieb des Filters wird zu filterndes Wasser über die Schlitzdüse 4 auf den in Fig. 3 schematisch umrissenen Bereich 15 der Oberseite des Filtersiebs 5 aufgebracht. Die Größe dieses Bereichs lässt sich durch die einstellbare Schlitzbreite der Schlitzdüse 4, den Druck des zugeführten Teichwassers und den Anstellwinkel des Filtersiebs 5 variieren. Für die Filterwirkung vorteilhaft ist das Filtersieb 5 von seiner der Wasserzuführung 2 zugewandten Seite zur gegenüberliegenden Seite hin leicht ansteigend angeordnet.

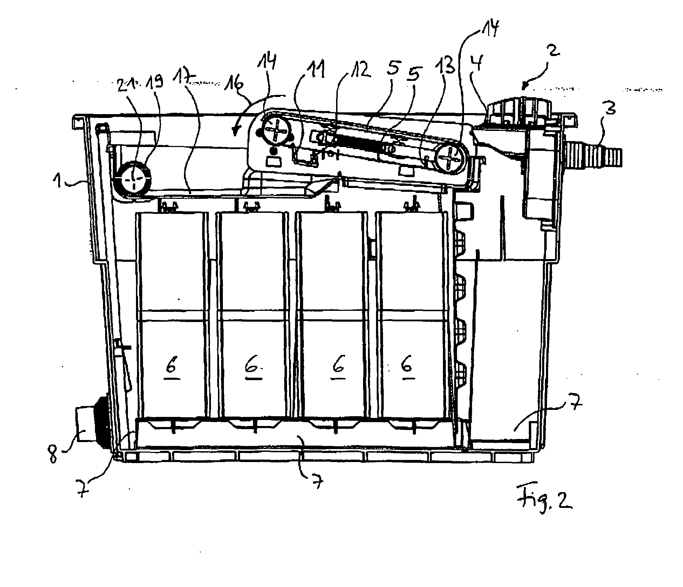

Während des Betriebs des Filters baut sich auf dem Filtersieb 5 ein Schmutzwall 9 auf. Auch die übrigen Bereiche des Filtersiebs 5 verschmutzen. Zur Reinigung des Filtersiebs 5 besitzt der Filter daher eine Reinigungseinrichtung, die bei der dargestellten Ausführungsform durch einen Schmutzabstreifer 11, eine Reinigungsbürste 12 zur Reinigung der Oberseite des Filtersiebs 5 und eine Reinigungsbürste 13 zur Reinigung der Unter- bzw. Innenseite des Filtersiebs 5 gebildet wird (siehe Fig. 2).

Zur Einleitung des Reinigungsvorgangs wird das Filtersieb 5, das über zwei Spann- und Antriebswalzen 14 geführt ist, in Richtung des Pfeils 16 bewegt. An der Oberseite des Filtersiebs 5 anhaftender Schmutz wird dadurch von dem Schmutzabstreifer 11 erfaßt und fällt in einen sich bis in diesen Bereich erstreckenden Auffangbehälter 17. Der Auffangbehälter 17 hat einen Griff 18 und kann damit gelegentlich zur Entfernung der aufgefangenen Schmutzpartikel herausgenommen werden. Es ist auch möglich, den Auffangbehälter 17 zu reinigen, indem dieser von einer nicht dargestellten Wasserzufuhr geflutet wird, wonach die Schmutzpartikel zusammen mit dem Flutungswasser über einen Schmutzablauf 19 herausgeführt werden.

Es ist sinnvoll, daß sich wie bei der dargestellten Ausführungsform die erste Reinigungsbürste 12 hinter dem Schmutzabstreifer 11 befindet, damit zunächst der grobe Schmutz abgestreift wird und sich nicht in den Reinigungsbürsten 12, 13 festsetzt.

Die dargestellte Ausführungsform des Filters verfügt über einen automatischen Antrieb mittels eines Motors 20. Dieser kann zur Reinigung des Filtersiebs 5 kontinuierlich umlaufen. Da die Verschmutzung des Filtersiebs 5 jedoch eher langsam voranschreitet, wird dies im Normalfall nicht nötig sein. Es reicht daher aus, wenn der Motor 20 intermittierend betrieben wird. Eine nicht dargestellte Steuerung könnte mittels eines Sensors den Verschmutzungsgrad des Filtersiebs 5 erfassen und den Motor 20 dann in Abständen anschalten. Eine solche Sensorik ist jedoch oftmals teuer und störanfällig, so daß sich eine Ausgestaltung empfiehlt, bei der der Motor 20 in regelmäßigen Abständen in Betrieb gesetzt und wieder gestoppt wird. Bevorzugt läuft der Motor 20 dabei nicht nur in eine Richtung, sondern eine abweichende Zeiteinheit auch in der Gegenrichtung. Dadurch entsteht eine Selbstreinigung des Schmutzabstreifers 11 und der Reinigungsbürsten 12, 13. Beispielsweise kann die Reinigungseinrichtung so betrieben werden, daß der Motor 20 ausgehend von der Darstellung in Fig. 3 etwa alle 30 Minuten 30 Sekunden im Rechtslauf, anschließend 15 Sekunden im Linkslauf betrieben wird und danach wieder 30 Minuten stillsteht.

Damit auch die Feinfiltereinheiten gelegentlich überprüft oder gewechselt werden können, ist der gesamte in Fig. 3 dargestellte Vorfilter (ohne die Wasserzuführung 2) um eine Schwenkachse 21 in Richtung des Pfeils 22 nach oben klappbar, so daß die darunter liegenden Elemente des Filters frei zugänglich sind.

Der erfindungsgemäße Filter zeichnet sich durch extrem hohen Bedienkomfort aus, da nur in sehr großen Zeitabständen der Auffangbehälter 17 geleert werden muß. Der Filter ermöglicht daher über längere Zeiträume eine nahezu wartungsfreie Filterung von Teichen oder dergleichen Gewässern.

## Patentansprüche

1. Teichfilter mit einem Filtersieb (5), einen auf das Filtersieb (5) folgenden Feinfilter (6) und einer Wasserzuführung (2), durch die zu filterndes Wasser auf die Oberseite des Filtersiebs (5) geleitet wird, wobei der Filter eine Reinigungseinrichtung für das Filtersieb (5) aufweist und das Filtersieb (5) und/oder Reinigungseinrichtung innerhalb des Teichfilters derart beweglich angeordnet sind, dass zwischen dem Filtersieb (5) und der Reinigungseinrichtung eine Relativbewegung unter Beibehaltung einer Berührung zwischen Filtersieb (5) und Reinigungseinrichtung zur Reinigung des Filtersiebs (5) einleitbar ist, wobei die Reinigungseinrichtung einen Schmutzabstreifer (11) umfasst und ein Auffangbehälter (17) vorhanden ist, der so angeordnet ist, dass der durch den Schmutzabstreifer (11) vom Filtersieb (5) entfernte Schmutz in den Auffangbehälter (17) gelangt, **dadurch gekennzeichnet daß** der Auffangbehälter einen Griff (18) hat, mit dem er zur Entfernung der Schmutzpartikel herausgenommen werden kann.

2. Filter nach einem der vorhergehenden Ansprüche, **dadurch gekennzeichnet, daß** die Reinigungseinrichtung eine Reinigungsbürste (12,13) umfasst.

3. Filter nach Anspruch 2, **dadurch gekennzeichnet, daß** eine Reinigungsbürste (13) an der Unterseite des Filtersiebs angeordnet ist.

4. Filter nach einem der vorhergehenden Ansprüche, **dadurch gekennzeichnet, daß** das Filtersieb (5) ein zumindest teilflexibles Filterband ist.

5. Filter nach Anspruch 4, **dadurch gekennzeichnet, daß** das Filterband aufroll bar ist.

6. Filter nach Anspruch 4 oder 5, **dadurch gekennzeichnet, daß** das Filterband als umlaufendes Endlosband ausgebildet ist.

7. Filter nach Anspruch 6, **dadurch gekennzeichnet, daß** das Filterband über Spann- und Antriebselemente (14) nach Art eines Förderbandes umlaufend bewegbar ist.

8. Filter nach einem der vorhergehenden Ansprüche, **gekennzeichnet durch** einen motorischen Antrieb für das Filtersieb (5) und/oder die Reinigungseinrichtung.

9. Filter nach Anspruch 8, **gekennzeichnet durch** eine Steuerung für einen intermittierenden Betrieb des motorischen Antriebs.

## Claims

1. A pond filter with a filter sieve (5), a fine filter (6) following the filter sieve (5) and a water supply (2) through which water to be filtered is conveyed onto the surface of the filter sieve (5), wherein the filter comprises a cleaning device for the filter sieve (5) and the filter sieve (5) and/or cleaning device are disposed in a mobile manner inside the pond filter, in such a way that a relative motion can be introduced between the filter sieve (5) and the cleaning device whilst maintaining contact between filter sieve (5) and the cleaning device for cleaning the filter sieve (5), wherein the cleaning device comprises a dirt scraper (11) and a collection container (17) is present, which is disposed in such a way that the dirt removed from the filter sieve (5) by the dirt scraper (11) enters into the collection container (17), **characterised in that** the collection container has a grip (18) with which it can be taken out in order to remove the dirt particles.

2. The filter according to any one of the preceding claims, **characterised in that** the cleaning device comprises a cleaning brush (12, 13).

3. The filter according to claim 2, **characterised in that** a cleaning brush (13) is disposed at the underside of the filter sieve.

4. The filter according to any one of the preceding claims, **characterised in that** the filter sieve (5) is at least one partially flexible filter band.

5. The filter according to claim 4, **characterised in that** the filter band can be rolled up.

6. The filter according to claim 4 or 5, **characterised in that** the filter band is constituted as a circulating continuous band.

7. The filter according to claim 6, **characterised in that** the filter band can be moved in a circulating manner over tensioning and drive elements (14) in the form of a conveyor belt.

8. The filter according to any one of the preceding claims, **characterised by** a motor drive for the filter sieve (5) and/or the cleaning device.

9. The filter according to claim 8, **characterised by** a control for an intermittent operation of the motor drive.

## Revendications

1. Filtre pour bassins comprenant un tamis filtrant (5), un filtre fin (6) consécutif au tamis filtrant (5) et une arrivée d'eau (2), par laquelle l'eau à filtrer est guidée sur le côté supérieur du tamis filtrant (5), le filtre présentant un dispositif de nettoyage pour le tamis filtrant (5) et le tamis filtrant (5) et/ou le dispositif de nettoyage étant disposé(s) de façon mobile à l'intérieur du filtre pour bassins de telle sorte que, entre le tamis filtrant (5) et le dispositif de nettoyage, un mouvement relatif peut être amorcé en conservant un contact entre le tamis filtrant (5) et le dispositif de nettoyage pour le nettoyage du tamis filtrant (5), le dispositif de nettoyage comprenant un racleur d'impuretés (11) et un récipient collecteur (17) étant présent, lequel est disposé de telle sorte que la saleté enlevée par le racleur d'impuretés (11) du tamis filtrant (5) parvient dans le récipient collecteur (17), **caractérisé en ce que** le récipient collecteur a une poignée (18) avec laquelle il peut être ôté pour l'enlèvement des particules de saleté.

2. Filtre selon l'une quelconque des revendications précédentes, **caractérisé en ce que** le dispositif de nettoyage comporte une brosse de nettoyage (12, 13).

3. Filtre selon la revendication 2, **caractérisé en ce qu'**une brosse de nettoyage (13) est disposée sur le côté inférieur du tamis filtrant.

4. Filtre selon l'une quelconque des revendications précédentes, **caractérisé en ce que** le tamis filtrant (5) est une bande filtrante au moins partiellement flexible.

5. Filtre selon la revendication 4, **caractérisé en ce que** la bande de filtre peut être enroulée.

6. Filtre selon la revendication 4 ou 5, **caractérisé en ce que** la bande filtrante est conçue sous forme de bande continue rotative.

7. Filtre selon la revendication 6, **caractérisé en ce que** la bande filtrante peut être déplacée au moyen d'éléments de serrage et d'entraînement (14) de façon rotative à la façon d'une bande transporteuse.

8. Filtre selon l'une quelconque des revendications précédentes, **caractérisé par** un entraînement par moteur pour le tamis filtrant (5) et/ou le dispositif de nettoyage.

9. Filtre selon la revendication 8, **caractérisé par** une commande pour un fonctionnement intermittent de l'entraînement par moteur.
